# EUROPEAN PATENT SPECIFICATION

(11) **EP 1 671 463 B1**
(45) Date of publication and mention of the grant of the patent: **12.09.2007**
(21) Application number: 04769479.9
(22) Date of filing: 22.09.2004
(51) Int. Cl.: H04L 29/06, H04N 7/173, G06F 9/445

(54) **METHOD OF PLAYING A MULTIMEDIA CONTENT TRANSMITTED BY A THIRD-PARTY ON A USER DEVICE**
VERFAHREN ZUM ABSPIELEN EINES VON DRITTEN AUF EINER BENUTZEREINRICHTUNG GESENDETEN MULTIMEDIA-INHALTS
PROCEDE DE LECTURE D'UN CONTENU MULTIMEDIA TRANSMIS PAR UN TIERS A L'AIDE UN DISPOSITIF UTILISATEUR

(30) Priority: 02.10.2003 EP 03300141
(43) Date of publication of application: 21.06.2006
(73) Proprietor: NXP B.V., 5656 AG Eindhoven (NL)
(72) Inventor: TRICAUD, Laurent, Société Civile SPID, F-75008 Paris (FR)
(74) Representative: Röggla, Harald
(86) International application number: PCT/IB2004/003124
(87) International publication number: WO 2005/034471

(56) References cited:
- US-A1- 2002 073 305
- US-B1- 6 373 498
- US-B1- 6 560 702

## Description

### FIELD OF THE INVENTION

The invention relates to a user device, a third-party device, and a system comprising a user device, a third-party device and a network, wherein said user device and said third-party device comprise means for communicating via said network.

The invention also relates to a method of playing a multimedia content on a user device, and a program comprising instructions for implementing such a method when executed by a processor in a user device.

The invention applies to, for example, personal communication devices, such as phones, ADSL modems, set-top-boxes having Web access, or the like.

### BACKGROUND OF THE INVENTION

US patent application n°20020193094A1 describes a method of downloading a phone software product (e.g. games, ring tones, banners, logos, etc.) to a wireless phone on request by a user. This is achieved by dialing a pay-per-call number belonging to a special pay-per-call numbering plan. The call is routed to a wireless telephone service provider and then to a software product content provider. The software product content provider prompts the user to select one or more software products to be downloaded and transfers the selected software product to the wireless telephone service provider which, in turn, transfers the software product to the wireless phone via an SMS gateway. The wireless service provider bills the subscriber at a premium rate for the phone call and transfers at least a portion of the premium rate to the software product content provider as payment for the downloaded software product.

Futhermore, US patent application n°2002/0073305 A1 describes a system and method for the delivery, retrieval and display of content to a user during the initial boot sequence of a computer or electronic device and/or after the completion of the initial boot sequence but prior to the loading of an operating system. Also a non-intrusive method of updating the content is provided, that minimizes the disruption to other processes running on the computer or electronic device. The method enables the content to be updated automatically following the loading of the operating system or in response of a user request, depending upon the implementation of said method.

According to US patent n°6,560,702 B1, a special BIOS is discussed which includes a program application manager (PAM) and a file system structure (FSS) that points to adresses on a mass storage device (MSD) for an application and at least one presentation playable by the application. The BIOS calls the PAM on startup, and the PAM checks for an application and presentation, and finding same loads the application and plays the presentation before loading the operation system (OS). Preferably the FSS is programmable.

US patent n°6,373,498 discloses a method and an apparatus to display an image during a transition of an operating system in a computer system. An image having an image format compatible with the operating system is obtained. Content of a system file corresponding to the transition of the operating system is created using the image in a system directory.

One of the objects of the invention is to propose another application in which multimedia content is transmitted to a user device, for example a mobile phone, via a network.

### SUMMARY OF THE INVENTION

A user device according to the invention is defined in claims 1 to 4. A method of playing a multimedia content on a user device according to the invention is defined in claims 5 to 9. A system according to the invention is defined in claim 10, and a program according to the invention is defined in claim 11.

A user device according to the invention comprises means for communicating via a network, means for booting, means for implementing, during said booting, a protocol for transmitting a multimedia content by a third-party device to said user device via said network, and means for playing, during said booting, a multimedia content transmitted by said third-party device.

According to the invention, a protocol for transmitting a multimedia content from a third-party to the user device is automatically implemented each time the user device is booted up without any interaction of the user, which means that the user does not select the transmitted multimedia content. When the user switches on the device, multimedia content is automatically played. This multimedia content is customized by the third-party and can be updated by the third-party, if required. Transmission and playing take place during booting.

One advantage of the invention is to allow transmission of a start-up multimedia content (for instance a video introduction, a video logo, an advertisement, etc.) from a third-party to a user device. By way of example the third-party may be the operator of the network, a content provider or the manufacturer of the user device. According to the invention, such a start-up multimedia content is customized by the third-party and can be updated whenever the third-party wishes to do so.

Another advantage of the invention is that such a start-up multimedia content is transmitted from the third-party to the user device in such a way that it minimizes the inconvenience for the user. According to the invention, the multimedia content is transmitted and played while the user device is booting. During booting, the user does not have access to the user device. However the communication means of the user device can operate from an early stage of the booting phase (what usually takes time in booting is charging the operating system of the user device; on average this may take 30 seconds or even more for high-end devices). The invention takes advantage of this situation by proposing that a start-up multimedia content is transmitted and played during a period of time when the user would be unable to use his device anyway. If the playback is terminated at the end of the booting process, there will be no inconvenience at all for the user.

Transmission from said third-party device to said user device is achieved either by downloading or by streaming. Downloading requires the multimedia content to be stored in a memory in the user device. Streaming has the advantage that such a storage in the user device is not needed. When the downloading mode is used, implementation of the transmission protocol only leads to an effective downloading of multimedia content when the third-party wishes to update the multimedia content to be played by the user device during booting.

Advantageously, the multimedia content is compressed in order to lower the network resources required for transmission. For example, it is compressed by using the H263 standard.

In a specific embodiment of the invention, when the multimedia content is streamed by the third-party device, playing of the multimedia content is stopped when the booting process is finished in order that the user may start using his device immediately.

### BRIEF DESCRIPTION OF THE DRAWINGS

These and other aspects of the invention are further described with reference to the following Figures:
- Fig. 1 is a schematic diagram of an example of a system according to the invention,
- Fig.2 is a general schematic diagram of a method according to the invention of playing a multimedia content in a user device,
- Fig.3 is a schematic diagram of a first alternative of the method of Fig.2;
- Fig.4 is a schematic diagram of a second alternative of the method of Fig.2;
- Fig. 5 is a block diagram of a user device according to the invention,
- Fig.6 is a block diagram of a third-party device according to the invention.

### DETAILED DESCRIPTION OF THE INVENTION

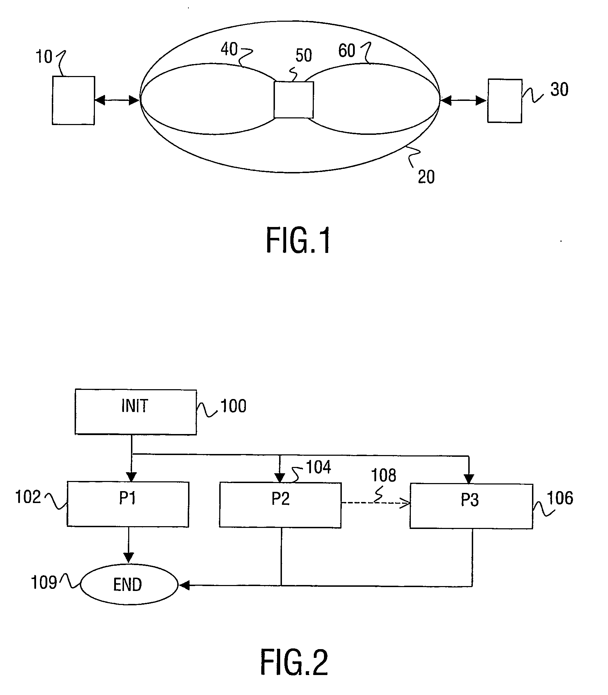

Referring to Figure 1, the system comprises a user device 10, a network 20 and a third-party device 30. The network 20 comprises a telephone network 40 having a Web or a WAP gateway 50. The third-party device 30 is a Web or a WAP server having access to the Web 60.

In a first example, the telephone network 40 is of the GPRS or UMTS type, and the user device is a mobile phone having access to the telephone network 40 via a radio link. In a second example, the user device is an ADSL box or a set-top-box connected to the telephone network 40 via a telephone wire.

The telephone network 40 is operated by an operator. The third-party may be the operator of the network 40 or any other actor, such as the manufacturer of the user device or a content provider having a business relationship with the operator.

Fig.2 is a general block diagram of a method according to the invention of playing a multimedia content on the user device 10. As indicated in Fig.2, this method comprises a step 100 of initiating the booting process of the user device 10. This step 100 is executed when the user switches on the user device. Then three processes P1, P2 and P3 are run in parallel:
- the booting process P1 (box 102),
- a process P2 of implementing a protocol for transmitting a multimedia content from the third-party device 30 to the user device 10 (box 104),
- a process P3 of playing a multimedia content transmitted by the third-party device 30 (box 106).

Dependent on the embodiment considered, there may be a relationship between processes P2 and P3. In Fig.2, this relationship is represented by an arrow 108.

When all of the three processes are finished (which is represented in box 109), the user device is available to the user for normal operations.

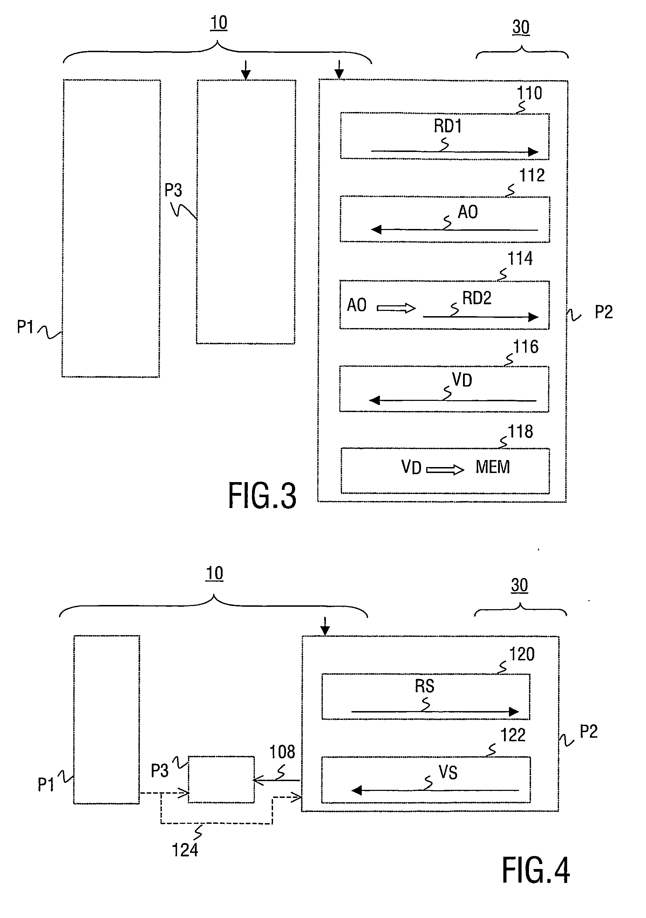

A first embodiment of the method of Fig.2 will now be described in detail with reference to Fig.3. In this first embodiment, the user device 10 has a content memory MEM for storing the content V_{BOOT} to be played during booting. The content playing process P3 plays the content V_{BOOT} stored in the content memory MEM when the user device is switched on. The content transmission process P2 allows replacement of the content to be played during booting. This is achieved by downloading a new content. The new content will be played during the next booting process (that is, the next time the user device is switched on).

It is to be noted that downloading takes time so that the process P2 may finish after completion of the booting process P1.

In this first embodiment, the process P2 of implementing the content transmission protocol comprises:
- a step 110 of transmitting a first request RD1 from said user device 10 to said third-party device 30, the first request RD1 asking whether the third-party device 30 has a content to download to said user device 10,
- a step 112 of transmitting a positive response AO from the third-party device 30 to the user device 10 when the third-party device has a multimedia content to download,
- a step 114 of transmitting a second request RD2 from the user device 10 to the third-party device 30, said second request asking for the download of a content,
- a step 116 of downloading a content V_{D} from said third-party device to said user device, and
- a step 118 of storing the downloaded content V_{D} into the content memory MEM.

In this first alternative, the content playing process P3 plays the content V_{MEM} (if any) that is stored in the content memory MEM prior to the execution of the process P2.

In this first alternative, the content transmission protocol is based on the HTTP transport protocol. By way of example, the first request RD 1 contains a unique identifier of the current start-up content V_{BOOT} played by the user device 10 during booting. This identifier may be the name of the content file, a URL of the content file, an MD5 key, or the like. This unique identifier is used by the third-party device 30 to decide whether or not a new content is to be downloaded to the user device 10, i.e. whether it has to send a positive response to the user device 10. Upon reception of a positive response AO, the user device 10 sends the second request RD2 asking for the download of multimedia content. This RD2 request points towards a CGI script (CGI stands for Common Gateway Interface) hosted by the third-party device 30. Upon reception of the request RD2 by the third-party device 30, the CGI script is executed which results in the download of the appropriate content.

In another embodiment not represented here, sending the second request RD2 upon reception of a positive response AO is not systematic. Based on one or more pre-defined criteria, the user device 10 may decide whether or not it sends the second request RD2. For example, the load of the network, or the size of the available memory may be a criterion.

In an alternative embodiment the first request RD1 does not contain any identifier of the current start-up content V_{BOOT} stored in the user device. Instead of sending such an identifier, the third-party device keeps a record of the start-up content or contents currently stored in the user devices and decides whether or not to send a new content by looking up its record.

A second embodiment of the method of Fig.2 will now be described in detail with reference to Fig.4. In this second embodiment, no start-up content is stored in the user device 10. The start-up content to be played during booting is transmitted from the third-party device 30 to the user device 10 by streaming each time the user device 10 is booted up. The process P2 of implementing the content transmission protocol comprises:
- a step 120 of transmitting a request RS from the user device 10 to the third-party device 30, said request asking for the streaming of a content, and
- a step 122 of streaming a content from the third-party device 30 to the user device 10 in response to said request.

In this second embodiment the content-playing process P3 plays the streamed content as it is received by the user device 10.

In this second embodiment, the content transmission protocol is based on the RTSP transport protocol. By way of example, the request RS points towards a known gateway in the network (for example, gateway 50 in Fig.1) and the gateway contains a redirection to a third-party device 30 where the content to be streamed is hosted.

Optionally, in this second embodiment, the streaming and playing processes P2 and P3 are forced to terminate as soon as the booting process P1 is finished in order that the user may start using the user device 10. In Fig.4, this forced termination of processes P2 and P3 is represented by an arrow 124.

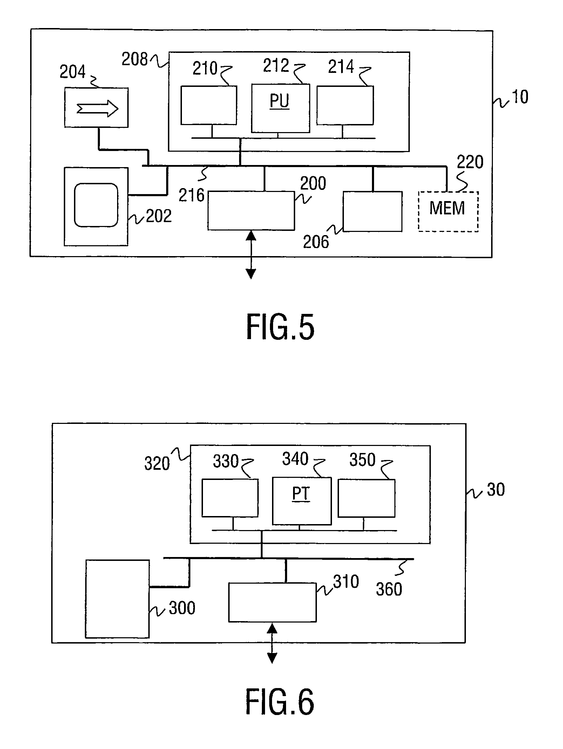

Fig.5 gives a representation of a user device 10. The user device 10 comprises:
- a transmission/reception circuit 200 for transmission/reception via the network 20,
- a display 202,
- a user interface 204,
- a content player 206 for playing content,
- a microprocessor arrangement 208 which comprises a working memory 210, a program memory 212 and a processor 214, and
- an interconnection bus 216.

In the first embodiment of the invention, the user device 10 also comprises a content memory 220 for storing content, in particular the content that is to be played during booting. As this memory can be omitted in the second alternative embodiment of the invention, it is represented in broken lines.

The program memory 212 contains programs for controlling the operation of the user device 10 and, inter alia, a program PU (or a set of programs) for implementing the processes P1, P2 and P3 described above.

Fig.6 is a block diagram of a third-party device 30. It comprises:
- a memory 300 for storing multimedia contents, in particular a content to be downloaded or streamed to user devices during their booting in order to be played by said user devices while they are booting,
- transmission/reception means 310 for transmission/reception via the Web,
- a microprocessor arrangement 320 which comprises a working memory 330, a program memory 340 and a processor 350, and
- an interconnection bus 360.

The program memory 320 contains programs for controlling the operation of the third-party device 30 and, inter alia, a program PT for implementing the process P2 described above.

With respect to the user device, method, third-party device, system and programs described above, modifications or improvements may be proposed without departing from the scope of the invention. The invention is thus not limited to the examples provided.

Use of the verb "comprise" and its conjugations in the text and in the claims does not exclude the presence of means or steps other than those stated.

Use of the article "a" or "an" for designating an element or step does not exclude the presence of a plurality of such elements or steps.

## Claims

1. A user device (10) comprising:
- means for communicating via a network (20),
- means for booting,
**characterised in** the user device further comprising
- means for implementing, during said booting, a protocol for transmitting a multimedia content by a third-party device (30) to said user device (10) via said network (20), and
- means for playing, during said booting, a multimedia content and means for receiving the said multimedia content from said third-party device (30) during said booting.

2. A user device as claimed in claim 1 comprising a memory (MEM) for storing a multimedia content, wherein:
a) said protocol-implementing means comprise:
- means for transmitting a first request (RD1) asking whether said third-party device (30) has a multimedia content (V_{D}) to download to said user device (10),
- means for receiving a response (A0) to said first request (RD1),
- means for sending a second request (RD2), depending at least on said response (A0), said second request (RD2) asking for the download of a multimedia content (V_{D}),
- means for receiving the downloaded multimedia content (V_{D}),
- means for storing the received content (V_{D}) in said memory (MEM), and
b) said playing means are designed to play a multimedia content (V_{D}) stored in said memory (MEM) prior to said downloading.

3. A user device as claimed in claim 1 wherein:
a) said protocol-implementing means comprise:
- means for transmitting a request (RS) asking for the streaming of a multimedia content (V_{S}), and
- means for receiving a multimedia content (V_{S}) streamed by said third-party device (30) in response to said request (RS), and
b) said playing means are designed to play the streamed multimedia content (V_{S}) as it is received.

4. A user device as claimed in claim 3 comprising means for stopping playing when said booting is finished.

5. A method of playing a content (V_{D}) on a user device having means for communicating via a network (20), said method comprising the steps of:
- booting said user device (10),
- implementing, during said booting, a protocol for receiving a multimedia content (V_{D}) from a third-party device (30) to said user device (10) via said network (20), and
- playing, during said booting, a multimedia content (V_{D}) transmitted by said third-party device (30).

6. A method as claimed in claim 5 of playing a multimedia content (V_{D}) on a user device (10) which comprises a memory (MEM) for storing a multimedia content (V_{D}), wherein:
a) said protocol-implementing step comprises:
- transmitting a first request (RF1) from said user device (10), said first request (RF1) asking whether said third-party device (30) has a multimedia content (V_{D}) to download to said user device (10),
- transmitting a response (A0) to said user device (10), at least if said third-party device (30) has a multimedia content (V_{D}) to download,
- transmitting a second request (RF2) from said user device (10) depending at least on said response (A0), said second request (RF2) asking for the download of said multimedia content (V_{D}),
- downloading said multimedia content (V_{D}) from said third-party device (30) to said user device (10),
- storing the downloaded multimedia content (V_{D}) in said memory (MEM), and
b) said playing step comprises playing a multimedia content (V_{D}) stored in said memory (MEM) prior to said downloading.

7. A method as claimed in claim 5 of playing a multimedia content (V_{D}) on a user device (10), wherein:
a) said protocol-implementation step comprises:
- transmitting a request (RS) from said user device (10), said request (RS) asking for the streaming of a multimedia content (V_{S}),
- streaming a multimedia content (V_{S}) from said third-party device (30) to said user device (10) in response to said request (RS), and
b) said playing step comprises playing the streamed multimedia content (V_{S}) on said user device (10) as it is received.

8. A method of playing a multimedia content as claimed in claim 5, wherein said multimedia content (V_{S}) is customized by said third-party device (30).

9. A method of playing a multimedia content as claimed in claim 5, wherein said multimedia content (V_{S}) is compressed.

10. A system comprising at least a user device (10), a third-party device (30) and a network (20), wherein said user device (10) and said third-party device (30) comprise means for communicating via said network (20), and means for implementing a protocol (P) for transmitting a multimedia content (V_{D}) by said third-party device (30) to said user device (10), and means for booting,
**characterised in** said user device (10) further comprising:
- means for initiating implementation of said protocol (P) during said booting, and
- means for playing, during said booting, a multimedia content (V_{D}) and means for receiving the said multimedia content from said third-party device (30) during said booting.

11. A program comprising instructions for implementing a method as claimed in claim 5, when executed by a microprocessor of a user device (10).

## Patentansprüche

1. Eine Benutzereinrichtung (10), umfassend:
- Mittel zur Datenübertragung über ein Netz (20),
- Mittel zum Hochfahren,
**dadurch gekennzeichnet, dass** die Benutzereinrichtung ferner umfasst:
- Mittel zum Umsetzen, während des Hochfahrens, eines Protokolls zum Senden eines Multimedia-Inhalts durch eine Dritteinrichtung (30) an die Benutzereinrichtung (10) über das Netz (20) und
- Mittel zum Abspielen, während des Hochfahrens, eines Multimedia-Inhalts und Mittel zum Empfangen des Multimedia-Inhalts von der Dritteinrichtung (30) während des Hochfahrens.

2. Eine Benutzereinrichtung nach Anspruch 1, umfassend einen Speicher (MEM) zum Speichern eines Multimedia-Inhalts, wobei:
a) die Mittel zum Umsetzen eines Protokolls umfassen:
- Mittel zum Senden einer ersten Anfrage (RD1), die anfragt, ob die Dritteinrichtung (30) einen Multimedia-Inhalt (V_{D}) zum Herunterladen auf die Benutzereinrichtung (10) aufweist,
- Mittel zum Empfangen einer Antwort (A0) auf die erste Anfrage (RD 1),
- Mittel zum Senden einer zweiten Anfrage (RD2), die zumindest von der Antwort (A0) abhängt, wobei die zweite Anfrage (RD2) um das Herunterladen eines Multimedia-Inhalts (V_{D}) ersucht,
- Mittel zum Empfangen des heruntergeladenen Multimedia-Inhalts (V_{D}),
- Mittel zum Speichern des empfangenen Inhalts (V_{D}) in dem Speicher (MEM), und
b) die Abspielmittel so konstruiert sind, dass sie einen in dem Speicher (MEM) gespeicherten Multimedia-Inhalt (V_{D}) vor dem Herunterladen abspielen.

3. Eine Benutzereinrichtung nach Anspruch 1, wobei:
a) die Mittel zum Umsetzen eines Protokolls umfassen:
- Mittel zum Senden einer Anfrage (RS), die um das kontinuierliche Übertragen eines Multimedia-Inhalts (V_{S}) ersucht, und
- Mittel zum Empfangen eines durch die Dritteinrichtung (30) als Reaktion auf die Anfrage (RS) kontinuierlich übertragenen Multimedia-Inhalts (V_{S}), und
b) die Abspielmittel so konstruiert sind, dass sie den kontinuierlich übertragenen Multimedia-Inhalt (V_{S}) abspielen, sobald er empfangen wird.

4. Eine Benutzereinrichtung nach Anspruch 3, umfassend Mittel zum Beenden des Abspielens, wenn das Hochfahren abgeschlossen ist.

5. Ein Verfahren zum Abspielen eines Inhalts (V_{D}) auf einer Benutzereinrichtung mit Mitteln zur Datenübertragung über ein Netz (20), wobei das Verfahren folgende Schritte umfasst:
- Hochfahren der Benutzereinrichtung (10),
- Umsetzen, während des Hochfahrens, eines Protokolls zum Empfangen eines Multimedia-Inhalts (V_{D}) von einer Dritteinrichtung (30) an die Benutzereinrichtung (10) über das Netz (20) und
- Abspielen, während des Hochfahrens, eines von der Dritteinrichtung (30) gesendeten Multimedia-Inhalts (V_{D}).

6. Ein Verfahren nach Anspruch 5 zum Abspielen eines Multimedia-Inhalts (V_{D}) auf einer Benutzereinrichtung (10), die einen Speicher (MEM) zum Speichern eines Multimedia-Inhalts (V_{D}) umfasst, wobei:
a) der Schritt zum Umsetzen eines Protokolls umfasst:
- Senden einer ersten Anfrage (RF1) von der Benutzereinrichtung (10), wobei die erste Anfrage (RF1) anfragt, ob die Dritteinrichtung (30) einen Multimedia-Inhalt (V_{D}) zum Herunterladen auf die Benutzereinrichtung (10) aufweist,
- Senden einer Antwort (A0) an die Benutzereinrichtung (10), zumindest wenn die Dritteinrichtung (30) einen Multimedia-Inhalt (V_{D}) zum Herunterladen aufweist,
- Senden einer zweiten Anfrage (RF2) von der Benutzereinrichtung (10), die zumindest von der Antwort (A0) abhängt, wobei die zweite Anfrage (RF2) um das Herunterladen des Multimedia-Inhalts (V_{D}) ersucht,
- Herunterladen des Multimedia-Inhalts (V_{D}) von der Dritteinrichtung (30) auf die Benutzereinrichtung (10),
- Speichern der heruntergeladenen Multimedia-Inhalts (V_{D}) in dem Speicher (MEM), und
b) der Abspielschritt das Abspielen eines in dem Speicher (MEM) gespeicherten Multimedia-Inhalts (V_{D}) vor dem Herunterladen umfasst.

7. Ein Verfahren nach Anspruch 5 zum Abspielen eines Multimedia-Inhalts (V_{D}) auf einer Benutzereinrichtung (10), wobei:
a) der Schritt zum Umsetzen eines Protokolls umfasst:
- Senden einer Anfrage (RS) von der Benutzereinrichtung (10), wobei die Anfrage (RS) um das kontinuierliche Übertragen eines Multimedia-Inhalts (V_{S}) ersucht,
- kontinuierliches Übertragen eines Multimedia-Inhalts (V_{S}) von der Dritteinrichtung (30) an die Benutzereinrichtung (10) als Reaktion auf die Anfrage (RS), und
b) der Abspielsschritt das Abspielen des kontinuierlich übertragenen Multimedia-Inhalts (V_{S}) auf der Benutzereinrichtung (10) umfasst, sobald er empfangen wird.

8. Ein Verfahren zum Abspielen eines Multimedia-Inhalts nach Anspruch 5, wobei der Multimedia-Inhalt (V_{S}) durch die Dritteinrichtung (30) auf den Kunden zugeschnitten ist.

9. Ein Verfahren zum Abspielen eines Multimedia-Inhalts nach Anspruch 5, wobei der Multimedia-Inhalt (V_{S}) komprimiert ist.

10. Ein System, das zumindest eine Benutzereinrichtung (10), eine Dritteinrichtung (30) und ein Netz (20) umfasst, wobei die Benutzereinrichtung (10) und die Dritteinrichtung (30) Mittel zur Datenübertragung über das Netz (20) und Mittel zum Umsetzen eines Protokolls (P) zum Senden eines Multimedia-Inhalts (V_{D}) durch die Dritteinrichtung (30) an die Benutzereinrichtung (10) und Mittel zum Hochfahren umfassen,
**dadurch gekennzeichnet, dass** die Benutzereinrichtung (10) ferner umfasst:
- Mittel zum Auslösen der Umsetzung des Protokolls (P) während des Hochfahrens und
- Mittel zum Abspielen, während des Hochfahrens, eines Multimedia-Inhalts (V_{D}) und Mittel zum Empfangen des Multimedia-Inhalts von der Dritteinrichtung (30) während des Hochfahrens.

11. Ein Programm, das Befehle zum Umsetzen eines Verfahrens nach Anspruch 5 umfasst, wenn es durch einen Mikroprozessor einer Benutzereinrichtung (10) ausgeführt wird.

## Revendications

1. Appareil pour utilisateur (10) comportant :
- des moyens de communication par l'intermédiaire d'un réseau (20),
- des moyens d'initialisation,
**caractérisé par le fait que** l'appareil pour utilisateur comporte en outre
- des moyens pour mettre en oeuvre, pendant ladite initialisation, un protocole pour le transport d'un contenu multimédia par un appareil tiers (30) audit appareil pour utilisateur (10) par l'intermédiaire dudit réseau (20), et
- des moyens pour jouer, pendant ladite initialisation, un contenu multimédia, et des moyens pour recevoir ledit contenu multimédia dudit appareil tiers (30) pendant ladite initialisation.

2. Appareil pour utilisateur selon la revendication 1, comportant une mémoire (MEM) pour le stockage d'un contenu multimédia, dans lequel :
a) lesdits moyens de mise en oeuvre du protocole comprennent :
- des moyens pour émettre une première requête (RD1) demandant si ledit appareil tiers (30) a un contenu multimédia (V_{D}) à télécharger dans ledit appareil pour utilisateur (10),
- des moyens pour recevoir une première réponse (AO) à ladite première requête (RD1),
- des moyens pour émettre une deuxième requête (RD2) dépendant au moins de ladite réponse (AO), ladite deuxième requête (RD2) demandant le téléchargement d'un contenu multimédia (V_{D}),
- des moyens pour recevoir le contenu multimédia téléchargé (V_{D}),
- des moyens pour stocker le contenu reçu (V_{D}) dans ladite mémoire (MEM), et
b) lesdits moyens pour jouer étant prévus pour jouer un contenu multimédia (V_{D}) stocké dans ladite mémoire (MEM) avant ledit téléchargement.

3. Appareil pour utilisateur selon la revendication 1, dans lequel :
a) lesdits moyens de mise en oeuvre du protocole comprennent :
- des moyens pour émettre une requête (RS) demandant l'envoi par streaming d'un contenu multimédia (V_{S}), et
- des moyens pour recevoir un contenu multimedia (V_{S}) envoyé par streaming par ledit appareil tiers (30) en réponse à ladite requête (RS), et
b) lesdits moyens pour jouer étant prévus pour jouer le contenu multimédia envoyé par streaming (V_{S}) au fur et à mesure de sa réception.

4. Appareil pour utilisateur selon la revendication 3, comportant des moyens pour arrêter de jouer lorsque l'initialisation est terminée.

5. Procédé pour jouer un contenu (V_{D}) sur un appareil pour utilisateur ayant des moyens de communication par l'intermédiaire d'un réseau (20), ledit procédé comprenant les étapes :
- d'initialisation dudit appareil pour utilisateur (10),
- de mise en oeuvre, pendant ladite initialisation, d'un protocole pour la réception d'un contenu multimédia (V_{D}) provenant d'un appareil tiers (30) par ledit appareil pour utilisateur (10) par l'intermédiaire dudit réseau (20), et
- de lecture, pendant ladite initialisation, d'un contenu multimédia (V_{D}) transmis par ledit appareil tiers (30).

6. Procédé selon la revendication 5 pour jouer un contenu multimédia (V_{D}) sur un appareil pour utilisateur (10) comportant une mémoire (MEM) pour le stockage d'un contenu multimédia (V_{D}), dans lequel :
a. ladite étape de mise en oeuvre du protocole comprend :
- la transmission d'une première requête (RF1) à partir dudit appareil pour utilisateur (10), ladite première requête (RF1) demandant si ledit appareil tiers (30) a un contenu multimédia (V_{D}) à télécharger dans ledit appareil pour utilisateur (10),
- la transmission d'une réponse (AO) vers ledit appareil pour utilisateur (10), au moins si l'appareil tiers (30) a un contenu multimédia (V_{D}) à télécharger,
- la transmission d'une deuxième requête (RF2)à partir dudit appareil pour utilisateur (10) dépendant au moins de ladite réponse (AO), ladite deuxième requête (RF2) demandant le téléchargement dudit contenu multimédia (V_{D}),
- le téléchargement dudit contenu multimédia (V_{D}) à partir dudit appareil tiers (30) dans ledit appareil pour utilisateur (10),
- le stockage du contenu téléchargé (V_{D}) dans ladite mémoire (MEM), et
b. ladite étape de lecture comprenant le fait de jouer un contenu multimédia (V_{D}) stocké dans ladite mémoire (MEM) avant ledit téléchargement.

7. Procédé selon la revendication 5, pour jouer un contenu multimédia (V_{D}) sur un appareil pour utilisateur (10), dans lequel :
a) ladite étape de mise en oeuvre du protocole comprend :
- l'émission d'une requête (RS) à partir dudit appareil pour utilisateur (10), ladite requête (RS) demandant l'envoi par streaming d'un contenu multimédia (V_{S}),
- l'envoi par streaming d'un contenu multimédia (V_{S}) à partir dudit appareil tiers (30) vers ledit appareil pour utilisateur (10) en réponse à ladite requête (RS), et
b) ladite étape de lecture comprenant le fait de jouer le contenu multimédia envoyé par streaming (V_{S}) sur ledit appareil pour utilisateur (10), au fur et à mesure de sa réception.

8. Procédé de lecture d'un contenu multimédia selon la revendication 5, dans lequel ledit contenu multimédia (V_{S}) est adapté par ledit appareil tiers (30).

9. Procédé de lecture d'un contenu multimédia selon la revendication 5, dans lequel ledit contenu multimédia (V_{S}) est compressé.

10. Système comportant au moins un appareil pour utilisateur (10), un appareil tiers (30) et un réseau (20), dans lequel ledit appareil pour utilisateur (10) et ledit appareil tiers (30) comportent des moyens de communication par l'intermédiaire d'un réseau (20), des moyens pour mettre en oeuvre un protocole (P) pour le transport d'un contenu multimédia (V_{D}) par un appareil tiers (30) audit appareil pour utilisateur (10) et des moyens d'initialisation,
**caractérisé par le fait que** l'appareil pour utilisateur (10) comporte en outre :
- des moyens pour mettre en oeuvre ledit protocole (P) pendant ladite initialisation, et
- des moyens pour jouer, pendant ladite initialisation, un contenu multimédia (V_{D}) et des moyens pour recevoir ledit contenu multimédia dudit appareil tiers (30) pendant ladite initialisation.

11. Programme comportant des instructions pour la mise en oeuvre du procédé selon la revendication 5, lorsque celui-ci est exécuté par un microprocesseur d'un appareil pour utilisateur (10).
